# EUROPEAN PATENT SPECIFICATION

(11) **EP 3 828 037 B1**
(45) Date of publication and mention of the grant of the patent: **03.04.2024**
(21) Application number: 20210148.1
(22) Date of filing: 27.11.2020
(51) Int. Cl.: B60R 16/02

(54) **ARRANGEMENT FOR ATTACHING AN INSULATOR SLEEVE TO AN ELECTRICAL CONDUCTOR**
ANORDNUNG ZUM BEFESTIGEN EINER ISOLIERHÜLSE AN EINEM ELEKTRISCHEN LEITER
DISPOSITIF DE FIXATION D'UN MANCHON ISOLANT SUR UN CONDUCTEUR ÉLECTRIQUE

(30) Priority: 28.11.2019 DE 202019106641 U
(43) Date of publication of application: 02.06.2021
(73) Proprietor: TE Connectivity Germany GmbH, 64625 Bensheim (DE)
(72) Inventor: Hoffmann, Bjoern, 64625 Bensheim (DE); Kähny, Frank, 64625 Bensheim (DE); Wolf, Marcus, 64625 Bensheim (DE); Weber, Alexander, 64625 Bensheim (DE)
(74) Representative: Grünecker Patent- und Rechtsanwälte PartG mbB

(56) References cited:
- EP-A1- 3 419 119
- WO-A1-2017/032762

## Description

The present invention refers to an arrangement for attaching electrical insulator sleeves to electrical conductors. Furthermore, the present invention also refers to electrical flat conductors and/or busbars with such attached insulator sleeves, for example for use in automotive applications with voltages in the range of 400 to 800 V DC.

In automotive engineering and in power engineering, electrical modules, such as battery modules, are connected via particularly flexible electrical conductors to transmit electrical currents. For reasons of electrical safety, these electrical conductors are often provided with an insulation or insulator sleeve surrounding the electrical conductor. The insulation is usually also flexible and in certain applications also serves to protect the electrical conductor from external mechanical, thermal and/or chemical effects.

A continuous adhesion between the inside of the insulator sleeve and the outside of the electrical conductor is a disadvantage if the electrical conductors have to be adapted to the spatial conditions of the electrical modules to be connected in the course of an assembly. For example, differences in height between individual connection points of the electrical modules are bridged by bending the electrical conductor together with the insulator sleeve. Particularly with narrow bending radii, material stresses can occur when the insulator sleeve and conductor adhere to each other, which can damage the conductor and/or insulator sleeve.

WO 2017/032762, showing the preamble of claim 1, A1 discloses an electric cable subassembly e.g. for a T-shaped connection point. A two-part housing with cable openings has strain relief means which, when the housing parts are joined together, engage in the jacket of cables passing through the respective cable openings. In particular, the strain relief means are formed in one piece with the housing parts on both sides of the cable openings as teeth which engage the cable jacket.

EP 3419119 A1 shows a module connector with two connection parts, which can be connected to one another in an electrically conductive manner and to which conductor elements, such as compacted ends of conductor braids can be attached. In order to ensure touch protection, insulations are provided around the conductor elements. The insulation can be a sleeve with a rectangular cross-section, through which the conductor element extends.

Accordingly, the present invention is based on the object of improving the functionality and the operational safety of the arrangements mentioned above.

This object is solved by an arrangement for attaching an insulator sleeve accommodating an electrical conductor to the electrical conductor, according to claim 1, wherein the arrangement comprises the insulator sleeve and a mounting sheath, wherein an end piece of the insulator sleeve is receivable in a receptacle opening of the mounting sheath, and wherein at least one holding pin is provided which penetrates the insulator sleeve and fixes the mounting sheath on the insulator sleeve in a non-displaceable manner in a length direction of the insulator sleeve, wherein the at least one holding pin is a part of a first shell forming the mounting sheath and a pin end of the respective holding pin facing away from the first shell penetrates a second shell forming the mounting sheath.

The advantages achieved with the above arrangement are that a positive-locking and preferably releasable connection is created between the insulator sleeve and the mounting sheath, and thus a non-adhering insulator sleeve can be easily attached to the electrical conductor. In particular, the at least one holding pin serves to create this positive-locking, preferably releasable connection between the insulator sleeve and the mounting sheath.

The invention can be further improved by the following embodiments, each of which being advantageous in itself and arbitrarily combinable with each other.

The insulator sleeve is preferably configured for electrical conductors of a predetermined size or cross-sectional geometry. Electrical conductors of a different size or cross-sectional geometry should not be used with such an insulator sleeve in this configuration.

In order to create a positive-locking, preferably releasable, connection between the electrical conductor and the mounting sheath, the at least one holding pin can penetrate the electrical conductor in addition to the insulator sleeve. In this configuration, the at least one holding pin is located at a place where the electrical conductor of predetermined size or cross-sectional geometry is located in the insulator sleeve. Alternatively, the electrical conductor can also be attached displaceably in the insulator sleeve without being penetrated by the holding pins.

By the configuration of the insulator sleeve for electrical conductors of a predetermined size or cross-sectional geometry, at least two, preferably parallel, holding pins can be provided at a distance perpendicular to the length direction, the distance being greater than the width of the electrical conductor corresponding to the predetermined size or cross-sectional geometry, so that the electrical conductor can pass between the holding pins without being penetrated by the holding pins. If required, the positive-locking, preferably releasable, connection between the electrical conductor and the mounting sheath can be created in this embodiment by other means, as explained below.

According to an embodiment of the invention, the insulator sleeve may have at least one through opening extending perpendicular to the length direction for the insertion or passage of the at least one holding pin. The inner diameter and/or the inner contour of the at least one through opening corresponds to the outer diameter and/or the outer contour of the at least one holding pin.

Preferably the insulator sleeve is configured as a tubular insulating jacket and has at least one pair of aligned through openings extending perpendicular to the length direction, the through openings of the pair being arranged on an outer surface of the insulating jacket mutually opposite with respect to the length direction of the insulator sleeve configured as the insulating jacket.

Optionally, the insulator sleeve can have a plurality of through openings, which are arranged in pairs overlapping in an insertion direction perpendicular to the length direction of the insulator sleeve. In this case a corresponding number of holding pins can be provided.

The at least one through opening allows a clearly definable and repeatable positioning of the insulator sleeve in relation to the mounting sheath. This simplifies the assembly of the insulator sleeve with the mounting sheath.

The mounting sheath is configured in several parts, preferably in two parts. For this, the mounting sheath consists of the first shell and the second shell which can be plugged together with the first shell in a plug-in direction perpendicular to the length direction. The shells can optionally be configured to be together and, when assembled, jointly create the receptacle opening.

The two-part embodiment allows, in a first assembly step, to provide the insulator sleeve and/or the electrical conductor along the plug-in direction in the first shell and subsequently, in a second assembly step, to push the second shell onto the first shell in the plug-in direction. Thus, the assembly steps can be carried out automatically, for example in a *pick-and-place* process.

According to another embodiment, the at least one holding pin can be a part of the mounting sheath, thus reducing the number of individual components required. In particular, the holding pin can project from a surface of the mounting sheath facing inwards in the insertion direction and protrude into the receptacle opening. The at least one holding pin can be configured as a straight, in particular cylindrical, dome-shaped, mandrel-shaped, cuboid or prism-shaped projection.

In this embodiment, the at least one holding pin can, for example, penetrate the pair of aligned through openings of the insulator sleeve and create the positive-locking connection between insulator sleeve and mounting sheath. Preferably, the insulator sleeve is made as a soft component, such as a silicone insulating tube, and the mounting sheath is made of a material that has a yield limit under mechanical stress that is higher than the tensile strength of the soft component. Thus, the load capacity of the positive-locking connection between the insulator sleeve and the mounting sheath is clearly defined, since the material of the insulator sleeve tears before the at least one holding pin of the mounting sheath would deform significantly.

In the two-part embodiment of the mounting sheath, the at least one holding pin is part of the first shell and thus functions as a positioning aid in so far as the at least one holding pin determines the position in which the at least one through opening of the insulator sleeve is to be placed.

If multiple holding pins are provided on the first shell, they may differ from each other in their shape in order to create a geometric coding which additionally prevents the insulator sleeve from being positioned incorrectly.

Optionally, the pin end of the respective holding pin facing away from the first shell can visibly penetrate the second shell. In particular, the at least one holding pin can project from the first shell in the direction of the second shell, whereby in the assembled state the respective pin end penetrates an inspection opening in the second shell and whereby the pin end is visible on an outer surface of the mounting sheath. Preferably, the inspection opening of the second shell is aligned with the at least one through opening of the insulator sleeve.

This provides the possibility to carry out a visual inspection during and/or after assembly to check whether the insulator sleeve has been positioned properly during assembly. In case of a wrong positioning, the at least one holding pin cannot penetrate the through openings in the insulator sleeve, so that the pin end of the at least one holding pin is covered by the insulator sleeve and is not visible.

If multiple holding pins are provided on the first shell, a corresponding number of inspection openings to be penetrated by the respective holding pins can be provided on the second shell. Holding pins and inspection openings can also be provided alternately on the first shell and on the second shell. Furthermore, the holding pins may differ from each other in their shape and, together with the associated inspection openings, create a geometric coding which additionally prevents the shells from being positioned incorrectly.

For example, a set of a first shell and an associated second shell may have a plurality of holding pins and inspection holes that differ in number, position and shape from another set of associated shells. In this way, a key-lock principle can be realized, which prevents that shells that do not belong together are plugged together and installed.

Alternatively, the at least one holding pin can be a separate component penetrating the mounting sheath and/or the insulator sleeve. The at least one holding pin can, for example, be configured as a screw, preferably a hand screw, which is screwed into a threaded bore of the mounting sheath, the first shell and/or the second shell and thereby penetrates the at least one through opening of the insulator sleeve.

In another embodiment, at least one latching device for latching the two shells can be located outside the receptacle opening of the mounting sheath and outside the insulator sleeve. Thus, the at least one latching device is easily accessible and contributes to a simplification of the dismantling of the positive-locking connection between the insulator sleeve and the mounting sheath. Additionally or alternatively, at least one latching element can be located at an outer edge of the end of the at least one holding pin, which can engage with an inner edge of the corresponding inspection opening.

In another alternative embodiment, the first shell and the second shell can be joined together by a connection comprising a screw connection, adhesive connection, welded connection and/or soldered connection.

According to another configuration, the receptacle opening of the mounting sheath can extend in a length direction and have a rectangular cross-section in a plane perpendicular to the length direction. In this case, the mounting sheath can consist of a cuboidal casing, whose two flat sides and two long sides connecting the flat sides surround the receptacle opening, wherein the resulting inner circumference of the receptacle opening is configured in such a way that the insulator sleeve surrounding the electrical conductor can be enclosed with a perfect fit. This embodiment is advantageous for applications in which flat conductors are used and is particularly suitable for use in cell connectors for battery modules.

Alternatively, the receptacle opening of the mounting sheath can have a square, polygonal, round or oval cross-section in a plane perpendicular to the length direction and be adapted for suitably shaped insulator sleeves and electrical conductors.

Optionally, the mounting sheath may include at least one housing section for a contact element attached to the electrical conductor, e.g. welded onto the end piece of the electrical conductor. In particular, the housing section may surround a distal end of the contact element facing away from the electrical conductor for longitudinal fixation. For this, the housing section may extend in the length direction beyond the distal end and rest on at least one surface of the contact element facing in the length direction and on at least one surface of the contact element facing against the length direction.

The arrangement according to the invention may further comprise an electrical conductor, wherein the insulator sleeve surrounds the electrical conductor, preferably along the entire length of the electrical conductor, and a positive-locking, preferably releasable, connection acting in the length direction of the electrical conductor exists between the mounting sheath and an end piece of the electrical conductor received in the receptacle opening. For this, the electrical conductor can optionally have at least one recess which is adapted to be complementary to the at least one holding pin and into which the at least one holding pin at least partially protrudes, and the mounting sheath is thus fixed to the electrical conductor against a tensile force acting in the length direction of the electrical conductor.

In this way, the insulator sleeve can be fixed to the electrical conductor by means of the mounting sheath and at the same time, locally limited relative movement between insulator sleeve and electrical conductor, e.g. within the scope of mechanical stress equalization movements, can be carried out unhindered.

Optionally, the end piece of the electrical conductor, which is accommodated in the receptacle opening, can have a contact element. The contact element can be welded, soldered or screwed on, for example. In this embodiment, the positive-locking connection can take place between the mounting sheath and the contact element. For example, between the contact element and the housing section of the mounting sheath, the longitudinal fixation described above can be provided, by which the mounting sheath is fixed to the electrical conductor in its length direction without displacement. In particular, a positive-locking connection can be created in this way without the electrical conductor having to be penetrated by the at least one holding pin.

In another embodiment, the insulator sleeve together with the mounting sheath can form a protection against contact for the electrical conductor and the contact element, preferably a protection against contact according to IPXXD or other corresponding standards. For this, the outer surfaces of the insulator sleeve and the mounting sheath are configured in such a way that all gaps present, such as the distance between the inner edge of the inspection opening and the outer edge of the pin end of the at least one holding pin, are smaller than X mm. This results in protection against the insertion of a wire with a diameter greater than X mm, where X is the value required by the relevant standard for protection against contact.

According to another embodiment, the arrangement may have at least one further insulator sleeve and one further mounting sheath for attaching the at least one further insulator sleeve to at least one further electrical conductor. In particular, the at least one further mounting sheath can have a receptacle opening with at least one holding pin for the positive-locking reception of an end piece of the at least one further insulator sleeve and/or an end piece of the at least one further electrical conductor, so that the at least one further mounting sheath can be fixed in a non-displaceable manner on the at least one further insulator sleeve in a length direction of the at least one further insulator sleeve. This is advantageous for applications in which a plurality of electrical conductors have to be connected to an electrical module, e.g. in the context of an interconnection of battery modules.

As an option, the mounting sheaths can be monolithically connected to each other in this embodiment to reduce the number of individual components required. The respective mounting sheaths can be configured according to the advantageous embodiments already explained.

In a particularly advantageous embodiment, the mounting sheaths can consist of a first multiple shell forming the mounting sheaths and a second multiple shell forming the mounting sheaths. Preferably, the first multiple shell can be latched together with the second multiple shell in the plug-in direction. This embodiment allows, in a first assembly step, to place all insulator sleeves and/or all electrical conductors along the plug-in direction in the first multiple shell and subsequently, in a second assembly step, to plug the second multiple shell onto the first multiple shell in the plug-in direction. Thus, these assembly steps can also be carried out automatically, for example in a *pick-and-place* process.

In the following, the invention is explained in more detail with reference to the drawings on the basis of a plurality of embodiments, the different features of which can be combined arbitrarily with each other according to the above remarks.
- Fig. 1: shows a schematic perspective exploded representation of an arrangement according to the invention according to a first embodiment;
- Fig. 2: shows a schematic perspective representation of the arrangement from Fig. 1;
- Fig. 3: shows a schematic sectional representation of the arrangement from Fig. 2 in side view;
- Fig. 4: shows another schematic sectional representation of the arrangement from Fig. 2 in perspective view;
- Fig. 5: shows a schematic perspective representation of an insulator sleeve according to the invention and an electrical conductor with contact element;
- Fig. 6: shows a schematic perspective representation of the arrangement from Fig. 5 provided in a first shell according to the invention;
- Fig. 7: shows a schematic perspective representation of the arrangement from Fig. 6 plugged together with a second shell according to the invention;
- Fig. 8: shows a schematic sectional representation of an arrangement according to the invention according to a second embodiment;
- Fig. 9: shows a schematic perspective exploded representation of an arrangement according to the invention according to a further embodiment; and
- Fig. 10: shows a schematic perspective representation of the arrangement from Fig. 9.

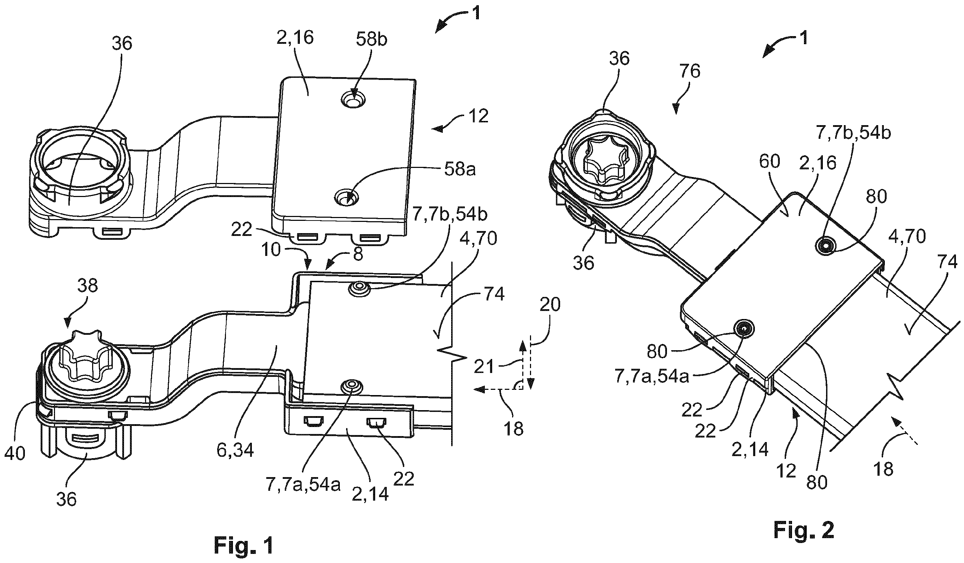

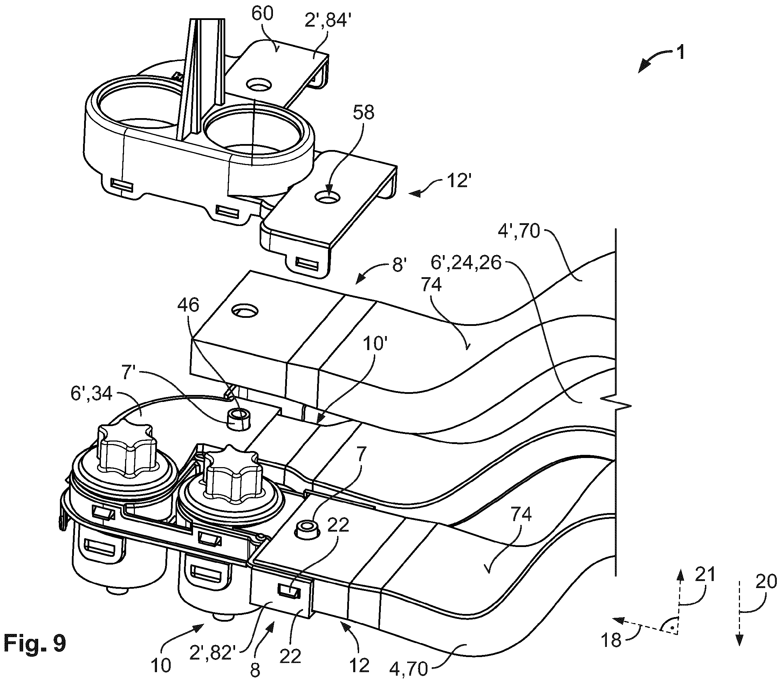

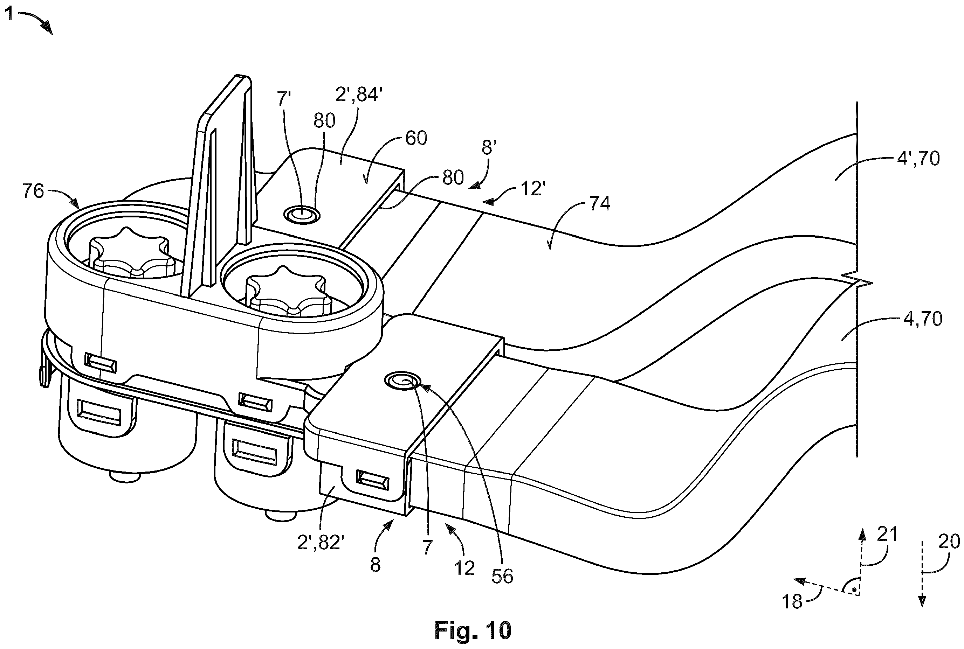

First, the schematic structure of an arrangement 1 according to the invention is shown according to a first possible embodiment with reference to Figs. 1 to 8. Subsequently, the schematic structure of an arrangement 1 in accordance with the invention is described according to a further possible embodiment with reference to Figs. 9 and 10.

The arrangement 1 in accordance with the invention may comprise a mounting sheath 2 and an insulator sleeve 4 in a first possible embodiment. The insulator sleeve 4 can accommodate or surround an electrical conductor 6, wherein the arrangement 1 can also comprise the electrical conductor 6. Optionally, the insulator sleeve 4 can surround the electrical conductor 6 along the entire length of the electrical conductor 6.

As shown in Fig. 1, the arrangement 1 can be used to attach the insulator sleeve 4 to the electrical conductor 6 by means of the mounting sheath 2. In particular, an end piece 8 of the insulator sleeve 4 and/or an end piece 10 of the electrical conductor 6 can be accommodated in a receptacle opening 12 of the mounting sheath 2 and fixed in a non-displaceable manner in a length direction 18 of the insulator sleeve.

According to the embodiment shown, the mounting sheath 2 is configured in two parts. For this, the mounting sheath 2 can consist of a first shell 14 and a second shell 16 which can be plugged together with the first shell 14 in a plug-in direction perpendicular to the length direction.

The shells 14, 16 can be adapted to be latched with each other and, when assembled, can create the receptacle opening 12 together. In particular, there may be at least one latching device 22 for latching the two shells 14, 16 outside the receptacle opening 12 of the mounting sheath 2 and outside the insulator sleeve 4. Alternatively, the first shell 14 and the second shell 16 can be connected to each other via a connection comprising a screw connection, adhesive connection, welded connection and/or soldered connection.

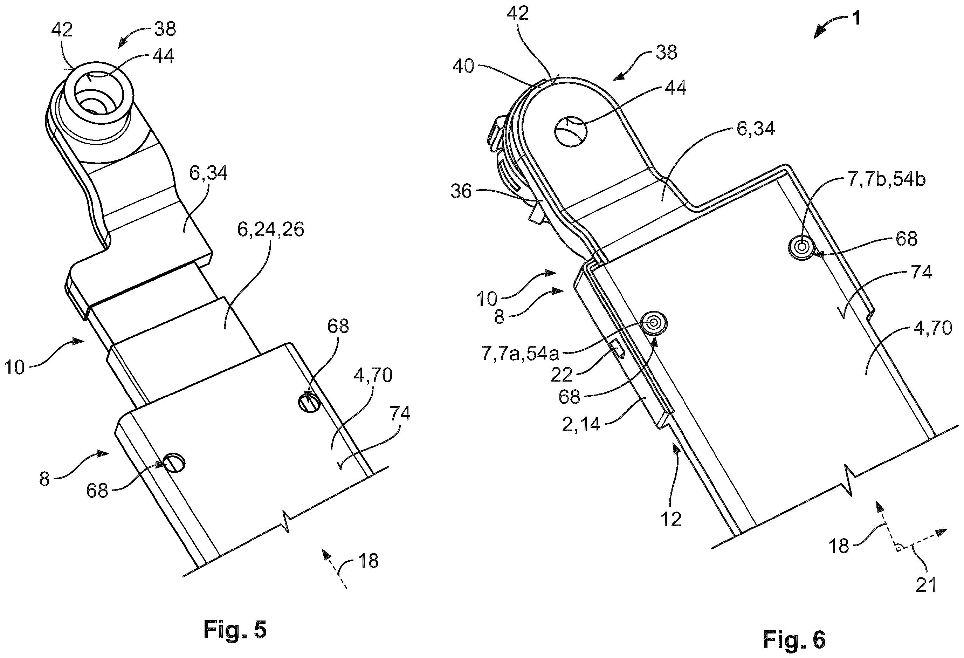

In the exemplary representations shown in Figs. 1 and 5, the electrical conductor 6 is configured as a flexible flat conductor 24 of a cell connector 26 for battery modules (not shown). However, the electrical conductor 6 can have any desired geometry, which is preferably predetermined and to which the shape of the insulator sleeve 4 and the shape of the receptacle opening 12 are adapted. Thus, the receptacle opening 12 of the mounting sheath 2 can extend straight in the length direction 18 and have a rectangular cross-section in a plane perpendicular to the length direction 18. Alternatively, the receptacle opening 12 of the mounting sheath 2 can have a square, polygonal, round or oval cross-section in the plane perpendicular to the length direction 18 and be configured for correspondingly shaped insulator sleeves 4 and electrical conductors 6.

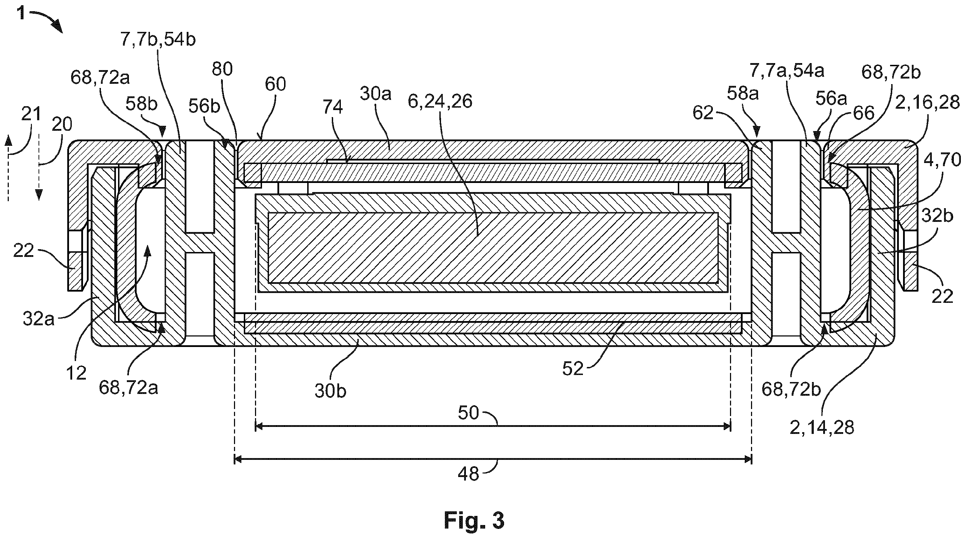

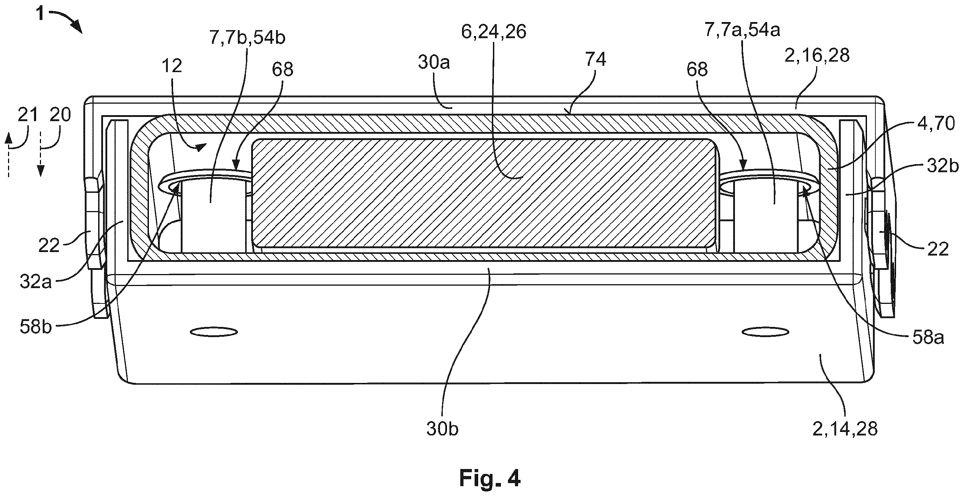

As shown in the sectional drawings in Figs. 3 and Fig. 4, the mounting sheath 2 for creating the rectangular cross-section can consist of a cuboidal casing 28 whose two flat sides 30a, 30b and two long sides 32a, 32b connecting the flat sides 30a, 30b surround the receptacle opening 12. The resulting inner circumference of the receptacle opening 12 can be configured in such a way that the insulator sleeve 4 surrounding the electrical conductor 6 can be enclosed with a perfect fit.

As shown in Fig. 5, the electrical conductor 6 may have a contact element 34 at the end piece 10 received in the receptacle opening 12. The contact element 34 can be welded, soldered or screwed on, for example, and can be accommodated in a housing section 36 of the mounting sheath 2. In particular, the housing section 36 can surround a distal end 38 of the contact element 34 facing away from the electrical conductor 6 and create a longitudinal fixation 40. For this, the housing section 36 can extend in the length direction 18 beyond the distal end 38 and rest on at least one surface 42 of the contact element 34 facing in the length direction 18 and on at least one surface 44 facing against the length direction 18. This results in a positive-locking, preferably releasable connection between the electrical conductor 6 and the mounting sheath 2. This is shown in Fig. 6.

As shown in Figs. 1 and 2, at least one holding pin 7 is provided in the receptacle opening 12, which penetrates the insulator sleeve 4 and thus fixes the mounting sheath 2 in length direction 18 on the insulator sleeve 4 in a non-displaceable manner. Depending on the application, one holding pin 7 may be sufficient as long as the at least one holding pin 7 creates a positive-locking, preferably a releasable connection between the insulator sleeve 4 and the mounting sheath 2.

As an alternative to or in addition to the longitudinal fixation 40 already explained, the at least one holding pin 7 can also penetrate the electrical conductor 6 to create a positive-locking, preferably releasable connection between the electrical conductor 6 and the mounting sheath 2. For this, the electrical conductor 6 can have at least one recess 46, which is complementary to the at least one holding pin 7 and into which the at least one holding pin 7 protrudes at least partially. This is shown as an example in Fig. 9 and 10.

In the exemplary embodiment shown in Figs. 1 and 2, in particular two parallel holding pins 7a, 7b are arranged at a distance from one another perpendicular to the length direction 18, the distance 48 between the two holding pins 7a, 7b being greater than a width 50 of the electrical conductor 6, so that the electrical conductor 6 can pass between the two holding pins 7a, 7b without being penetrated by the two holding pins 7a, 7b. This is shown in the sectional drawing in Fig. 3.

As further illustrated in Fig. 3, the at least one holding pin 7 can project as a part of the mounting sheath 2 from a surface 52 of the mounting sheath 2 facing inwardly towards the receptacle opening 12 and protrude into the receptacle opening 12. In the exemplary embodiments shown, the holding pins 7a, 7b are configured as straight, cylindrical projections 54a, 54b which project from the first shell 14 into the receptacle opening 12, whereby a pin end 56a, 56b of the respective holding pin 7a, 7b facing away from the first shell 14 penetrates a corresponding inspection opening 58a, 58b in the second shell 16. Preferably, the respective pin end 56a, 56b is visible on an outer surface 60 of the mounting sheath 2 in an assembled state of the shells 14, 16.

In addition or as an alternative to the at least one latching device 22, at least one latching element 64 may be located on an outer edge 62 of the pin end 56 of the at least one holding pin 7, which may latch with an inner edge 66 of the inspection opening 58.

In an alternative embodiment not shown, the at least one holding pin can also be configured as a dome-shaped, mandrel-shaped, cuboid or prism-shaped projection. If multiple holding pins are provided, the holding pins can differ among themselves in their shape and thus generate a geometrical coding. In addition, a set of a first shell 14 and an associated second shell 16 can, for example, have a plurality of holding pins 7 and inspection openings 58, which differ in number, position and shape from another set of associated shells according to a key-lock principle.

As shown in Fig. 5, the insulator sleeve 4 may have at least one through opening 68 for inserting or passing through the at least one holding pin 7. Preferably, the inner diameter and/or the inner contour of the at least one through opening 68 corresponds to the outer diameter and/or the outer contour of the at least one holding pin 7.

In the exemplary embodiment shown, the insulator sleeve 4 is configured as a tubular insulating jacket 70 and has two pairs 72a, 72b of aligned through openings 68 at the end piece 8 received in the receptacle opening 12, the through openings 68 of the respective pair 72a, 72b being arranged opposite one another on an outer surface 74 of the insulating jacket 70 with respect to the length direction 18. The insulator sleeve can of course have a plurality of through openings 68, which are arranged in pairs in an overlapping arrangement in an insertion direction 21 perpendicular to the length direction of the insulator sleeve 4. Accordingly, a holding pin 7 can be provided for each pair of through openings 68.

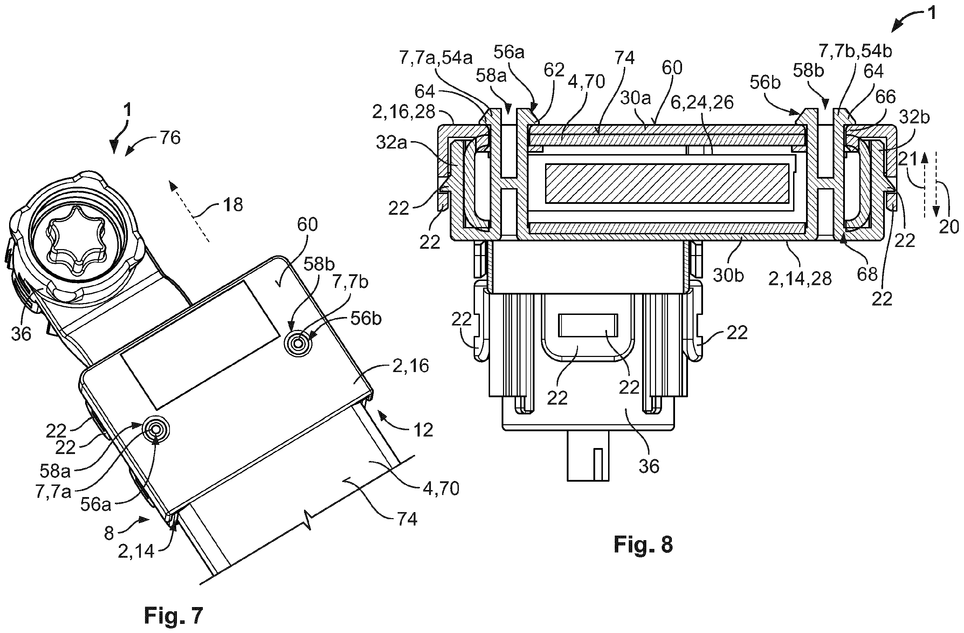

As shown in Fig. 7, the insulator sleeve 4 together with the mounting sheath 2 can form for the electrical conductor 6 and the contact element 34 a contact protection 76, especially a protection against the insertion of a wire (not shown) with a diameter greater than X mm. For this, the outer surfaces 60, 74 of the insulator sleeve 4 and the mounting sheath 2 can be configured in such a way that all gaps 80 present, for example the distance between the inner edge 66 of the inspection opening 58 and the outer edge 62 of the pin end 56 of the at least one holding pin 7, are smaller than X mm, where X corresponds to a normatively required value.

Figs. 9 and 10 show a further embodiment of the arrangement 1 according to the invention, which has at least one further insulator sleeve 4' and a further mounting sheath 2' for attaching the at least one further insulator sleeve 4' to at least one further electrical conductor 6'. In particular, the at least one further mounting sheath 2' can have a receptacle opening 12' with at least one holding pin 7' for the positive-locking reception of an end piece 8' of the at least one further insulator sleeve 4' and/or an end piece 10' of the at least one further electrical conductor 6'.

As further shown in Figs. 9 and 10, the mounting sheath 2, 2' can consist of a first multiple shell 82' forming the mounting sheath 2, 2' and a second multiple shell 82' forming the mounting sheath 2, 2'. Preferably, the first multiple shell 82' can be latched together with the second multiple shell 84' in plug-in direction 20. Optionally, the multiple shells 82', 84' can be configured in such a way that the receptacle openings 12, 12' are arranged coplanar.

### Reference numerals

- 1: arrangement
- 2, 2': mounting sheath
- 4, 4': insulator sleeve
- 6, 6': electrical conductor
- 7, 7', 7a, 7b: holding pin
- 8, 8': end piece (of the insulator sleeve)
- 10, 10': end piece (of the electrical conductor)
- 12, 12': receptacle opening
- 14: first shell
- 16: second shell
- 18: length direction
- 20: plug-in direction
- 21: insertion direction
- 22: latching device
- 24: flexible flat conductor
- 26: cell connector
- 28: cuboidal casing
- 30a, 30b: flat side
- 32a, 32b: long side
- 34: contact element
- 36: housing section
- 38: distal end
- 40: longitudinal fixation
- 42: surface (of the contact element)
- 44: surface (of the contact element)
- 46: recess
- 48: distance
- 50: width
- 52: (inward facing) surface
- 54a, 54b: projections
- 56, 56a, 56b: pin end
- 58, 58a, 58b: inspection opening
- 60: outer surface (of the mounting sheath)
- 62: outer edge
- 64: latching element
- 66: inner edge
- 68: through opening
- 70: insulating jacket
- 72a, 72b: pair
- 74: outer surface (of the insulating jacket)
- 76: contact protection
- 80: gap
- 82 ': first multiple shell
- 84': second multiple shell

## Claims

1. Arrangement (1) for attaching an insulator sleeve (4) accommodating an electrical conductor (6) to the electrical conductor (6), wherein the arrangement (1) comprises the insulator sleeve (4) and a mounting sheath (2), wherein an end piece (8) of the insulator sleeve (4) is receivable in a receptacle opening (12) of the mounting sheath (2), and wherein at least one holding pin (7) is provided which penetrates the insulator sleeve (4), and fixes the mounting sheath (2) on the insulator sleeve (4) in a non-displaceable manner in a length direction (18) of the insulator sleeve (4), wherein the at least one holding pin (7) is a part of a first shell (14) forming the mounting sheath (2), **characterized in that** a pin end (56) of the respective holding pin (7) facing away from the first shell (14) penetrates a second shell (16) forming the mounting sheath (2).

2. Arrangement (1) according to claim 1, wherein the insulator sleeve (4) has at least one through opening (68) for the insertion of the at least one holding pin (7).

3. Arrangement (1) according to claim 1 or 2, wherein the mounting sheath (2) consists of two parts.

4. Arrangement (1) according to one of claims 1 to 3, wherein the at least one holding pin (7) is a part of the mounting sheath (2).

5. Arrangement (1) according to one of claims 1 to 4, wherein at least one latching device (22) for latching the two shells (14, 16) is located outside the receptacle opening (12) of the mounting sheath (2).

6. Arrangement (1) according to one of claims 1 to 5, wherein the receptacle opening (12) of the mounting sheath (2) has a rectangular cross-section.

7. Arrangement (1) according to one of claims 1 to 6, wherein the mounting sheath (2) comprises a housing section (36) for a contact element (34) attached to the electrical conductor (6).

8. Arrangement (1) according to one of claims 1 to 7, wherein the arrangement (1) further comprises an electrical conductor (6), and wherein the insulator sleeve (4) surrounds the electrical conductor (6) and a positive-locking connection acting in the length direction of the electrical conductor (6) exists between the electrical conductor (6) and the mounting sheath (2).

9. Arrangement (1) according to claim 8, wherein the electrical conductor (6) has a contact element (34) and the positive-locking connection takes place between the mounting sheath (2) and the contact element (34).

10. Arrangement (1) according to one of claims 1 to 9, wherein the insulator sleeve (4) together with the mounting sheath (2) forms a contact protection (76) for the electrical conductor (6).

11. Arrangement (1) according to one of claims 1 to 10, wherein the electrical conductor (6) is penetrated by the at least one holding pin (7).

12. Arrangement (1) according to one of claims 1 to 10, wherein at least two holding pins (7a, 7b) are provided in the receptacle opening (12), wherein the electrical conductor (6) has a predetermined cross-sectional geometry, and wherein the electrical conductor (6) can be accommodated between the at least two holding pins (7a, 7b) in the receptacle opening (12).

13. Arrangement (1) according to one of claims 1 to 12, wherein the arrangement (1) comprises at least one further insulator sleeve (4') and a further mounting sheath (2') for attaching the at least one further insulator sleeve (4') to at least one further electrical conductor (6'), and the mounting sheaths (2, 2') are monolithically connected to one another.

14. An arrangement (1) according to claim 13, wherein the mounting sheaths (2, 2') comprise a first multiple shell (82') forming the mounting sheaths (2, 2') and a second multiple shell (84') forming the mounting sheaths (2, 2').

## Patentansprüche

1. Anordnung (1) zum Befestigen einer Isolatorhülse (4) zur Aufnahme eines elektrischen Leiters (6) am elektrischen Leiter (6), wobei die Anordnung (1) die Isolatorhülse (4) und eine Montagehülle (2) umfasst, wobei ein Endstück (8) der Isolatorhülse (4) in einer Aufnahmeöffnung (12) der Montagehülle (2) aufnehmbar ist, und wobei wenigstens ein Haltestift (7) vorhanden ist, der die Isolatorhülse (4) durchdringt und die Montagehülle (2) an der Isolatorhülse (4) auf eine nicht verschiebbare Weise in einer Längsrichtung (18) der Isolatorhülse (4) befestigt, wobei der wenigstens eine Haltestift (7) ein Teil einer die Montagehülle (2) bildenden ersten Schale (14) ist, **dadurch gekennzeichnet, dass** ein von der ersten Schale (14) weg zeigendes Stiftende (56) des jeweiligen Haltestifts (7) eine die Montagehülle (2) bildende zweite Schale (16) durchdringt.

2. Anordnung (1) nach Anspruch 1, wobei die Isolatorhülse (4) wenigstens eine Durchgangsöffnung (68) zum Einführen des wenigstens einen Haltestifts (7) aufweist.

3. Anordnung (1) nach Anspruch 1 oder 2, wobei die Montagehülle (2) aus zwei Teilen besteht.

4. Anordnung (1) nach einem der Ansprüche 1 bis 3, wobei der wenigstens eine Haltestift (7) ein Teil der Montagehülle (2) ist.

5. Anordnung (1) nach einem der Ansprüche 1 bis 4, wobei wenigstens eine Verriegelungsvorrichtung (22) zum Verriegeln der zwei Schalen (14, 16) außerhalb der Aufnahmeöffnung (12) der Montagehülle (2) angeordnet ist.

6. Anordnung (1) nach einem der Ansprüche 1 bis 5, wobei die Aufnahmeöffnung (12) der Montagehülle (2) einen rechteckigen Querschnitt aufweist.

7. Anordnung (1) nach einem der Ansprüche 1 bis 6, wobei die Montagehülle (2) einen Gehäuseabschnitt (36) für ein am elektrischen Leiter (6) befestigtes Kontaktelement (34) umfasst.

8. Anordnung (1) nach einem der Ansprüche 1 bis 7, wobei die Anordnung (1) ferner einen elektrischen Leiter (6) umfasst, und wobei die Isolatorhülse (4) den elektrischen Leiter (6) umgibt und eine in der Längsrichtung des elektrischen Leiters (6) wirkende formschlüssige Verbindung zwischen dem elektrischen Leiter (6) und der Montagehülse (2) besteht.

9. Anordnung (1) nach Anspruch 8, wobei der elektrische Leiter (6) ein Kontaktelement (34) aufweist und die formschlüssige Verbindung zwischen der Montagehülse (2) und dem Kontaktelement (34) besteht.

10. Anordnung (1) nach einem der Ansprüche 1 bis 9, wobei die Isolatorhülse (4) zusammen mit der Montagehülle (2) einen Kontaktschutz (76) für den elektrischen Leiter (6) bildet.

11. Anordnung (1) nach einem der Ansprüche 1 bis 10, wobei der elektrische Leiter (6) vom wenigstens einen Haltestift (7) durchdrungen wird.

12. Anordnung (1) nach einem der Ansprüche 1 bis 10, wobei wenigstens zwei Haltestifte (7a, 7b) in der Aufnahmeöffnung (12) angeordnet sind, wobei der elektrische Leiter (6) eine vorbestimmte Querschnittsgeometrie aufweist, und wobei der elektrische Leiter (6) zwischen den wenigstens zwei Haltestiften (7a, 7b) in der Aufnahmeöffnung (12) angeordnet sein kann.

13. Anordnung (1) nach einem der Ansprüche 1 bis 12, wobei die Anordnung (1) wenigstens eine weitere Isolatorhülse (4') und eine weitere Montagehülle (2') zum Befestigen der wenigstens einen weiteren Isolatorhülse (4') am wenigstens einen weiteren elektrischen Leiter (6') umfasst und die Montagehüllen (2, 2') integral miteinander verbunden sind.

14. Anordnung (1) nach Anspruch 13, wobei die Montagehüllen (2, 2') eine erste Mehrfachschale (82') zum Bilden der Montagehüllen (2, 2') und eine zweite Mehrfachschale (84') zum Bilden der Montagehüllen (2, 2') umfassen.

## Revendications

1. Dispositif (1) destiné à fixer sur un conducteur électrique (6) un manchon isolant (4) accueillant le conducteur électrique (6), le dispositif (1) comprenant le manchon isolant (4) et un fourreau de montage (2), un élément d'extrémité (8) du manchon isolant (4) pouvant être reçu dans une ouverture de logement (12) du fourreau de montage (2), et au moins une broche de maintien (7) étant prévue, pénétrant le manchon isolant (4), et immobilisant le fourreau de montage (2) sur le manchon isolant (4) de façon à ce qu'il ne puisse plus bouger dans la direction de la longueur (18) du manchon isolant (4), dans lequel la ou les broches de maintien (7) font partie d'une première coque (14) formant le fourreau de montage (2), **caractérisé en ce qu'**une extrémité de broche (56) de la broche respective de maintien (7) faisant face depuis la première coque (14) pénètre dans une seconde coque (16) formant le fourreau de montage (2).

2. Dispositif (1) selon la revendication 1, dans lequel le manchon isolant (4) comporte au moins une ouverture traversante (68) destinée à l'insertion de la ou des broches de maintien (7).

3. Dispositif (1) selon la revendication 1 ou la revendication 2, dans lequel le fourreau de montage (2) est constitué de deux pièces.

4. Dispositif (1) selon l'une des revendications 1 à 3, dans lequel le ou les broches de maintien (7) font partie du fourreau de montage (2).

5. Dispositif (1) selon l'une des revendications 1 à 4, dans lequel au moins un dispositif de blocage (22) destinée à verrouiller les deux coques (14, 16) est situé à l'extérieur de l'ouverture de logement (12) du fourreau de montage (2).

6. Dispositif (1) selon l'une des revendications 1 à 5, dans lequel l'ouverture de logement (12) du fourreau de montage (2) présente une section transversale rectangulaire.

7. Dispositif (1) selon l'une des revendications 1 à 6, dans lequel le fourreau de montage (2) comprend une section d'accueil (36) pour un élément de contact (34) fixé au conducteur électrique (6).

8. Dispositif (1) selon l'une des revendications 1 à 7, le dispositif (1) comprenant en outre un conducteur électrique (6) et le manchon isolant (4) entourant le conducteur électrique (6), et une connexion de verrouillage positif agissant sur la direction de la longueur du conducteur électrique (6) se trouve entre le conducteur électrique (6) et le fourreau de montage (2).

9. Dispositif (1) selon la revendication 8, dans lequel le conducteur électrique (6) comporte un élément de contact (34) et la connexion à verrouillage positif prend place entre le fourreau de montage (2) et l'élément de contact (34).

10. Dispositif (1) selon l'une des revendications 1 à 9, dans lequel le manchon isolant (4) avec le fourreau de montage (2) forment une protection de contact (76) pour le conducteur électrique (6).

11. Dispositif (1) selon l'une des revendications 1 à 10, dans lequel le conducteur électrique (6) se voit pénétré par le ou les broches de maintien (7).

12. Dispositif (1) selon l'une des revendications 1 à 10, dans lequel au moins deux broches de maintien (7a, 7b) sont prévues dans l'ouverture de logement, le conducteur électrique (6) présentant une géométrie transversale prédéterminée, le conducteur électrique (6) peut être logé entre les deux broches de maintien (7) ou plus dans l'ouverture de logement (12).

13. Dispositif (1) selon l'une des revendications 1 à 12, le dispositif (1) comprenant au moins un autre manchon isolant (4') et un autre fourreau de montage (2') destinés à fixer le ou les autres manchons isolants (4') sur au moins un autre conducteur électrique (6'), et les manchons isolants (2, 2') sont reliés l'un à l'autre d'un seul tenant.

14. Dispositif (1) selon la revendication 13, dans lequel les manchons isolants (2, 2') comprennent une première coque multiple (82') formant les manchons isolants (2, 2') et une seconde coque multiple (84') formant les manchons isolants (2, 2').
